# EUROPEAN PATENT SPECIFICATION

(11) **EP 2 873 907 B1**
(45) Date of publication and mention of the grant of the patent: **27.03.2019**
(21) Application number: 14193112.1
(22) Date of filing: 13.11.2014
(51) Int. Cl.: F16P 1/02

(54) **Protective element for an automatic machine**
Sicherungselement für eine automatische Maschine
Element de protection pour une machine automatique

(30) Priority: 13.11.2013 IT BO20130624
(43) Date of publication of application: 20.05.2015
(73) Proprietor: Corsini S.r.l., 40137 Bologna (IT)
(72) Inventor: Corsini, Ivano, 40137 Bologna (IT)
(74) Representative: Mangini, Simone

(56) References cited:
- DE-A1- 3 102 749
- DE-C1- 3 809 590
- DE-U1- 9 407 796
- DE-U1- 20 215 823
- GB-A- 425 393
- Giraud L.: "Machine Safety: prevention of mechanical hazards (Guide RG-597)", , 2009, pages 27,38-39, XP002727961, IRSTT, Montreal ISBN: 978-2-89631-341-9 Retrieved from the Internet: URL:http://www.irsst.qc.ca/media/documents /pubirsst/rg-597.pdf [retrieved on 2014-07-29]

## Description

### TECHNICAL FIELD

The present invention relates to a protective element for automatic machines and to an industrial plant.

### FIELD OF THE INVENTION

Several types of protective elements for automatic machines are currently known.

A first type of protective elements comprises panels of a transparent material. While these protective elements are relatively functional and aesthetically pleasant, they have high production costs.

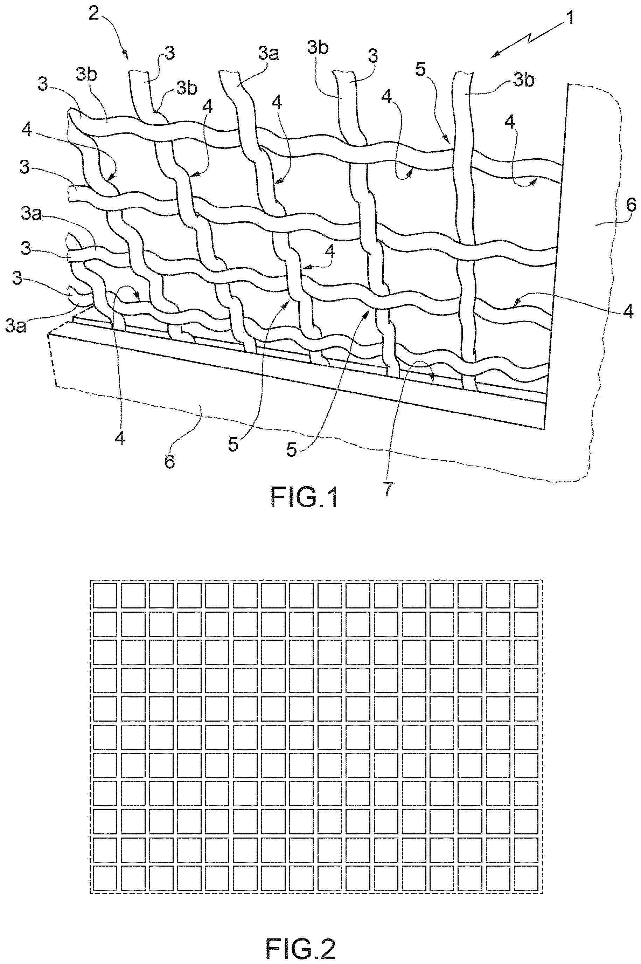

A second type of protective elements comprises heat-sealed nets (figure 2) of metal with openings of different sizes. When the openings are relatively small, the operator is unable to easily observe the automatic machine arranged behind the net. This can compromise the effectiveness of the protective element since the operator, to correctly understand how the machine is working, needs to remove at least partially the protective element, which therefore is no longer able to entirely carry out its protection function. When, on the other hand, the openings are relatively large, the fingers (or any other small parts) of the operator can pass through the protective element resulting in dangerous situations, at least potentially.

Document "Machine safety: prevention of mechanical hazards (Guide RG-597)" (by Laurent Giraud, ISBN 978-2-89631-341-9) discloses methods for reducing hazards, as well as ways to protect against them by using fixed guards. In particular, a guard made of perforated or meshed material and having a frame painted a bright colour is disclosed therein.

The object of the present invention is to provide a protective element and an industrial plant which allow overcoming, at least partially, the drawbacks of the prior art and which are, at the same time, simple and cost-effective to manufacture.

### SUMMARY

According to the present invention, there are provided a protective element and an industrial plant, as claimed in the independent claim 1 hereafter, and, preferably, in any one of the claims depending either directly or indirectly on the independent claim.

### BRIEF DESCRIPTION OF THE FIGURES

The invention is described hereafter with reference to the accompanying drawings, which show a non-limiting embodiment example thereof, in which:
- figure 1 shows a perspective view of a detail of a protective element according to the present invention;
- figure 2 shows a front view of a net of the prior art; and
- figure 3 shows a plan view of an industrial plant according to the present invention.

### EMBODIMENTS OF THE INVENTION

In figure 1, reference numeral 1 indicates as a whole a protective element for automatic machines. The protective element comprises a net 2 (substantially rigid), which is provided with a plurality of wires 3 in a dark color. Wires 3 are arranged so as to define openings 4 with an area ranging from about 64 mm² to about 144 mm². Each wire 3 has a thickness up to about 2.5 mm. Advantageously, each wire is made of metal material.

It should be noted that the combination of the above-mentioned dimensions with a dark color allows obtaining a good shielding of the automatic machines and unexpectedly seeing through net 2 and relatively easily understand how the machines are operating. From the tests run, it seems that, unexpectedly, the dark color helps the human eye to overlook net 2.

In this respect, it is noted that, according to present invention, the dark color ranges from RAL:5003 to RAL:5004, from RAL:7016 to RAL:7022, from RAL:7024 to RAL:7026, from RAL:8019 to RAL:8022, from RAL:9004 to RAL:9005, or from RAL:9011 to RAL:9017. Advantageously, the dark color ranges from RAL:7016 to RAL:7022, from RAL:7024 to RAL:7026, or from RAL:9004 to RAL:9005.

In some cases, the dark color is selected within the group consisting of: RAL:5003, RAL:5004, RAL:7016, RAL:7021, RAL:7024, RAL:7026, RAL:8019, RAL:8022, RAL:9004, RAL:9005, RAL:9011, and RAL:9017. In particular, the dark color is selected within the group consisting of: RAL:7016, RAL:7021, RAL:7024, RAL:7026, RAL:9004, RAL:9005, RAL:9011, and RAL:9017. More in particular, the dark color is selected within the group consisting of: RAL:7016, RAL:7021, RAL:7024, RAL:7026, RAL:9004 and RAL:9005. More precisely, the dark color is selected within the group consisting of: RAL:7016 and RAL:9005.

According to specific embodiments, the dark color is selected within the group consisting of: RAL:5004, RAL:5008, RAL:7016, RAL:7021, RAL:7024, RAL:7026, RAL:8022, RAL:9004, RAL:9005, RAL:9011, and RAL:9017.

It is noted that in the present text, it is meant that the dark color is a particular RAL code even if the color defined by such a code is not identical to the dark color, but is in any case more similar to the dark color than the colors of the other codes (i.e. similar so as to be reasonably confused). According to particular embodiments, the dark color is the color defined by RAL code to which reference is made.

Advantageously, wires 3 have a thickness of at least 1.5 mm. Moreover, usually, wires 3 are drawn wires.

According to some embodiments, wires 3 are mainly made of iron (in particular, they comprise at least 98% by weight, relative to their total weight, of iron). Advantageously, the wires contain from 0.03% to 0.06% (in particular, about 0.04%) by weight, relative to their total weight, of carbon.

According to specific embodiments, the wires also contain from 0.44% to 0.52% (in particular, about 0.48%) of manganese, from 0.13% to 0.19% (in particular, about 0,16%) of silicon, from 0.006% to 0.008% (in particular, about 0.007%) of phosphorus, from 0.012% to 0.014% (in particular, about 0.013%) of sulfur, from 0.043% to 0.047% (in particular, about 0.045%) of chromium, from 0.021% to 0.025% (in particular, about 0.023%) of nickel, from 0.003% to 0.005% (in particular, about 0.004%) of molybdenum, from 0.092% to 0.0112% (in particular, about 0.102%) of copper, up to 0.002% (in particular, about 0.001%) of thallium, from 0.007% to 0.009% (in particular, about 0.008%) of nitrogen, from 0.003% to 0.005% (in particular, about 0.004%) of tin, up to 0.003% (in particular, about 0.002%) of boron.

Note that the above percentages are to be considered by weight relative to the total weight of wires 3.

According to the embodiment shown, openings 4 have a substantially square shape with a side of from about 12 mm to about 8 mm.

In particular, net 2 has an interlaced mesh. More precisely, wires 3 are interlaced according to a plain weave.

Advantageously, wires 3 are undulating. In this way, net 2 has an increased resistance to transverse pressures (on the plane on which net 2 itself lies). In particular, net 2 comprises a plurality of wires 3a substantially parallel to one another and a plurality of wires 3b (substantially parallel to one another) substantially transverse (in particular, substantially perpendicular) to wires 3a. Each wire 3a has an S shape between two adjacent wires 3b and a respective curvature 5 at each of wires 3b, which are arranged at the groove of curvature 5.

Likewise, each wire 3b has an S shape between two adjacent wires 3a and a respective curvature 5 at each of wires 3a, which are arranged at the groove of curvature 5.

It is noted that wires 3a and 3b are part of wires 3. More specifically, the combination of wires 3a and wires 3b defines the set of wires 3.

According to preferred embodiments, the protective element 1 comprises a peripheral frame 6 (typically of metal) arranged about net 2 (in order to delimit and support net 2 itself). Preferably, frame 6 is tied to ends of wires 3.

Frame 6 has a (longitudinal) groove 7 in which the ends of wires 3 are housed.

Typically, groove 7 has a width greater than the thickness of wires 3. According to some embodiments, groove 7 has a width from about 3 mm to about 6 mm. In some cases, the groove has a width of about 5 mm.

Advantageously, silicone (not shown) is arranged within groove 7 in order to stabilize (block) the ends of wires 3. In this way, the movements of the ends of wires 3 within groove 7 itself are prevented (or in any case limited).

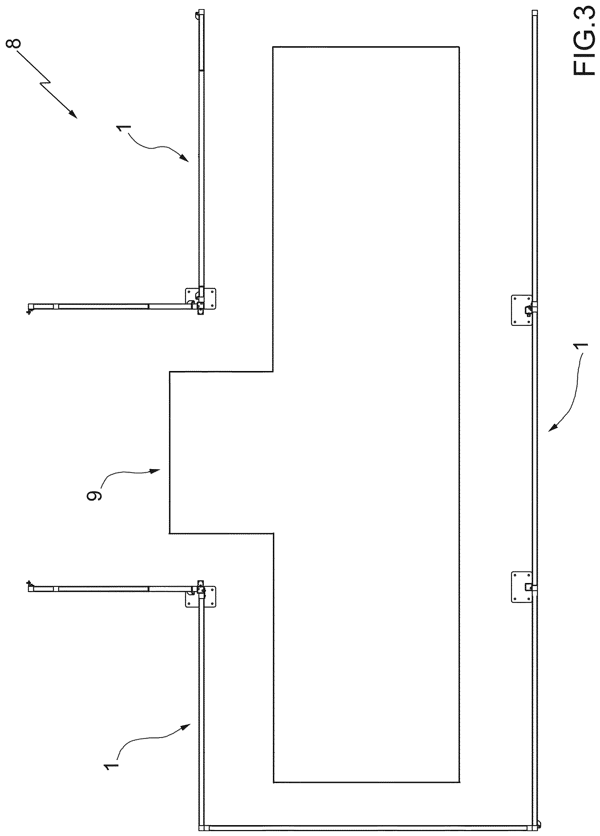

With particular reference to figure 3, according to a further aspect of the present invention, there is provided an industrial plant 8 comprising at least one automatic machine 9 and at least one protective element 1 according to what described above. The protective element 1 is at least partially arranged about the automatic machine 9.

## Claims

1. A protective element for automatic machines (9); the protective element comprising a net (2), which is provided with a plurality of wires (3) with a dark color; the wires (3) having a thickness ranging from 1.5 mm to 2.5 mm and being arranged so as to define openings (4) with an area ranging from 64 mm² to 144 mm²; the dark color ranges from RAL:5003 to RAL:5004, from RAL:7016 to RAL:7022, from RAL:7024 to RAL:7026, from RAL:8019 to RAL:8022, from RAL:9004 to RAL:9005, or from RAL:9011 to RAL:9017.

2. A protective element according to claim 1, wherein the net (2) has an interlaced mesh and is made of a metal material.

3. A protective element according to claim 1 or 2, wherein the dark color ranges from RAL:7016 to RAL:7022, from RAL:7024 to RAL:7026, or from RAL:9004 to RAL:9005.

4. A protective element according to any one of the preceding claims, wherein the dark color is selected within the group consisting of: RAL:5003, RAL:5004, RAL:7016, RAL:7021, RAL:7024, RAL:7026, RAL:8019, RAL:8022, RAL:9004, RAL:9005, RAL:9011, and RAL:9017.

5. A protective element according to claim 4, wherein the dark color is selected within the group consisting of: RAL:7016, RAL:7021, RAL:7024, RAL:7026, RAL:9004, RAL:9005, RAL:9011, and RAL:9017.

6. A protective element according any one of the preceding claims, wherein the dark color is selected within the group consisting of: RAL:5004, RAL:5008, RAL:7016, RAL:7021, RAL:7024, RAL:7026, RAL:8022, RAL:9004, RAL:9005, RAL:9011, and RAL:9017.

7. A protective element according to any of the preceding claims, wherein the wires (3) are interlaced with one another according to a plain weave.

8. A protective element according to any of the preceding claims, wherein the wires (3) are undulating.

9. A protective element according to any of the preceding claims, wherein the net (2) comprises a plurality of first wires (3a), which are substantially parallel to one another, and a plurality of second wires (3b) (substantially parallel to one another), which are substantially transverse to the first wires (3a); each first wire (3a) has, between two adjacent second wires (3b) an S-shape and a respective curvature (5) in the area of each one of the second wires (3b), which are arranged in the area of the bend of the curvature (5).

10. A protective element according to any of the preceding claims and comprising a peripheral frame (6), which is arranged around the net (2); the frame (6) has at least one groove (7), which at least partially houses the ends of the wires (3); the protective element (1) comprising, furthermore, silicone inside said groove (7).

11. An industrial plant comprising at least one automatic machine (9) and at least one protective element (1), which is at least partially arranged around the automatic machine (9); the protective element (1) being defined according to any of the preceding claims.

## Patentansprüche

1. Schutzelement für automatische Maschinen (9); wobei das Schutzelement ein Netz (2) aufweist, das mit einer Mehrzahl von Drähten (3) mit dunkler Farbe versehen ist; wobei die Drähte (3) eine Dicke in einem Bereich von 1,5 mm bis 2,5 mm aufweisen und derart angeordnet sind, dass sie Öffnungen (4) mit einer Fläche in einem Bereich von 64 mm² bis 144 mm² bilden; wobei die dunkle Farbe in einem Bereich von RAL:5003 bis RAL:5004, von RAL:7016 bis RAL:7022, von RAL:7024 bis RAL7026, von RAL:8019 bis RAL:8022, von RAL:9004 bis RAL:9005 oder von RAL:9011 bis RAL:9017 liegt.

2. Schutzelement nach Anspruch 1,
wobei das Netz (2) ein verflochtenes Gitter aufweist und aus einem Metallmaterial hergestellt ist.

3. Schutzelement nach Anspruch 1 oder 2,
wobei die dunkle Farbe in einem Bereich von RAL:7016 bis RAL:7022, von RAL:7024 bis RAL:7026 oder von RAL:9004 bis RAL:9005 liegt.

4. Schutzelement nach einem der vorhergehenden Ansprüche,
wobei die dunkle Farbe ausgewählt ist innerhalb der Gruppe bestehend aus: RAL:5003, RAL:5004, RAL7016, RAL:7021, RAL:7024, RAL7026, RAL:8019, RAL8022, RAL:9004, RAL:9005, RAL:9011 und RAL:9017.

5. Schutzelement nach Anspruch 4,
wobei die dunkle Farbe ausgewählt ist innerhalb der Gruppe bestehend aus: RAL:7016, RAL:7021, RAL:7024, RAL:7026, RAL:9004, RAL:9005, RAL:9011 und RAL:9017.

6. Schutzelement nach einem der vorhergehenden Ansprüche,
wobei die dunkle Farbe ausgewählt ist innerhalb der Gruppe bestehend aus: RAL:5004, RAL:5008, RAL:7016, RAL:7021, RAL:7024, RAL:7026, RAL:8022, RAL:9004, RAL:9005, RAL:9011 und RAL:9017.

7. Schutzelement nach einem der vorhergehenden Ansprüche,
wobei die Drähte (3) in einer Leinwandbindung miteinander verflochten sind.

8. Schutzelement nach einem der vorhergehenden Ansprüche,
wobei die Drähte (3) wellenförmig sind.

9. Schutzelement nach einem der vorhergehenden Ansprüche,
wobei das Netz (2) eine Mehrzahl von ersten Drähten (3a), die im Wesentlichen parallel zueinander sind, und eine Mehrzahl von zweiten Drähten (3b) (im Wesentlichen parallel zueinander) aufweist, die im Wesentlichen quer zu den ersten Drähten (3a) sind; wobei jeder erste Draht (3a) zwischen zwei benachbarten zweiten Drähten (3b) eine S-Form und eine jeweilige Krümmung (5) im Bereich von jedem der zweiten Drähte (3b) aufweist, die im Bereich der Biegung der Krümmung (5) angeordnet sind.

10. Schutzelement nach einem der vorhergehenden Ansprüche,
das einen umlaufenden Rahmen (6) aufweist, der um das Netz (2) herum angeordnet ist; wobei der Rahmen (6) mindestens eine Nut (7) aufweist, in der die Enden der Drähte (3) zumindest teilweise untergebracht sind; wobei das Schutzelement (1) ferner Silikon im Inneren der Nut (7) aufweist.

11. Industrieanlage mit mindestens einer automatischen Maschine (9) und mindestens einem Schutzelement (1), das zumindest teilweise um die automatische Maschine (9) herum angeordnet ist; wobei das Schutzelement (1) nach einem der vorhergehenden Ansprüche ausgebildet ist.

## Revendications

1. Élément de protection pour des machines automatiques (9) ; l'élément de protection comprenant un filet (2), qui est pourvu d'une pluralité de fils (3) ayant une couleur sombre ; les fils (3) ayant une épaisseur variant entre 1,5 mm et 2,5 mm et étant disposés de sorte à définir des ouvertures (4) ayant une superficie variant entre 64 mm² et 144 mm² ; la couleur sombre varie entre RAL:5003 et RAL:5004, entre RAL:7016 et RAL:7022, entre RAL:7024 et RAL:7026, entre RAL:8019 et RAL:8022, entre RAL:9004 et RAL:9005, ou entre RAL:9011 et RAL:9017.

2. Élément de protection selon la revendication 1, dans lequel le filet (2) présente un maillage entrelacé et est composé d'un matériau métallique.

3. Élément de protection selon la revendication 1 ou 2, dans lequel la couleur sombre varie entre RAL:7016 et RAL:7022, entre RAL:7024 et RAL:7026, ou entre RAL:9004 et RAL:9005.

4. Élément de protection selon l'une quelconque des revendications précédentes, dans lequel la couleur sombre est sélectionnée dans le groupe constitué par : RAL:5003, RAL:5004, RAL:7016, RAL:7021, RAL:7024, RAL:7026, RAL:8019, RAL:8022, RAL:9004, RAL:9005, RAL:9011 et RAL:9017.

5. Élément de protection selon la revendication 4, dans lequel la couleur sombre est sélectionnée dans le groupe constitué par : RAL:7016, RAL:7021, RAL:7024, RAL:7026, RAL:9004, RAL:9005, RAL:9011 et RAL:9017.

6. Élément de protection selon l'une quelconque des revendications précédentes, dans lequel la couleur sombre est sélectionnée dans le groupe constitué par : RAL:5004, RAL:5008, RAL:7016, RAL:7021, RAL:7024, RAL:7026, RAL:8022, RAL:9004, RAL:9005, RAL:9011 et RAL:9017.

7. Élément de protection selon l'une quelconque des revendications précédentes, dans lequel les fils (3) sont entrelacés les uns avec les autres en fonction d'une armure toile.

8. Élément de protection selon l'une quelconque des revendications précédentes, dans lequel les fils (3) ondulent.

9. Élément de protection selon l'une quelconque des revendications précédentes, dans lequel le filet (2) comprend une pluralité de premiers fils (3a), qui sont sensiblement parallèles les uns par rapport aux autres, et une pluralité de seconds fils (3b) (sensiblement parallèles les uns par rapport aux autres), qui sont sensiblement transversaux aux premiers fils (3a) ; chaque premier fil (3a) présente, entre deux seconds fils adjacents (3b), une forme de S et une courbure respective (5) dans la zone de chacun des seconds fils (3b) qui sont disposés dans la zone du coude de la courbure (5).

10. Élément de protection selon l'une quelconque des revendications précédentes et comprenant un cadre périphérique (6), qui est disposé autour du filet (2) ; le cadre (6) comporte au moins une rainure (7), qui reçoit au moins partiellement les extrémités des fils (3) ; l'élément de protection (1) comprenant, en outre, du silicone à l'intérieur de ladite rainure (7).

11. Installation industrielle comprenant au moins une machine automatique (9) et au moins un élément de protection (1), qui est disposé au moins partiellement autour de la machine automatique (9) ; l'élément de protection (1) étant défini selon l'une quelconque des revendications précédentes.
